# EUROPÄISCHE PATENTSCHRIFT

(11) **EP 4 227 915 B1**
(45) Veröffentlichungstag und Bekanntmachung des Hinweises auf die Patenterteilung: **31.12.2025**
(21) Anmeldenummer: 22155949.5
(22) Anmeldetag: 09.02.2022
(51) Int. Cl.: G07C 1/10, G06Q 10/00, G06Q 10/1091

(54) **VERFAHREN ZUM BETREIBEN EINER ZEIT- UND/ODER ANWESENHEITSERFASSUNGSEINRICHTUNG; ZEIT- UND/ODER ANWESENHEITSERFASSUNGSEINRICHTUNG; SERVERSYSTEM; SYSTEM; COMPUTERPROGRAMMPRODUKT**
METHOD FOR OPERATING A TIME AND / OR PRESENCE DETECTION DEVICE; TIME AND / OR PRESENCE DETECTION DEVICE; SERVER SYSTEM; SYSTEM; COMPUTER PROGRAM PRODUCT
PROCÉDÉ DE FONCTIONNEMENT D'UN DISPOSITIF DE DÉTECTION D'HEURE ET/OU DE PRÉSENCE, DISPOSITIF DE DÉTECTION D'HEURE ET/OU DE PRÉSENCE, SYSTÈME SERVEUR, SYSTÈME, PRODUIT-PROGRAMME INFORMATIQUE

(43) Veröffentlichungstag der Anmeldung: 16.08.2023
(73) Patentinhaber: dormakaba Deutschland GmbH, 58256 Ennepetal (DE)
(72) Erfinder: Koeppinger, Hartmut, 78056 Villingen-Schwenningen (DE)
(74) Vertreter: Balder IP Law, S.L.

(56) Entgegenhaltungen:
- EP-A1- 3 133 498
- US-A1- 2005 172 028
- US-A1- 2015 170 104
- US-A1- 2017 024 683

## Beschreibung

Die vorliegende Erfindung betrifft eine Zeit- und/oder Anwesenheitserfassungseinrichtung sowie ein Verfahren zum Betreiben einer Zeit- und/oder Anwesenheitserfassungseinrichtung. Ferner betrifft die Erfindung ein Serversystem. Des Weiteren betrifft die vorliegende Erfindung ein System, aufweisend eine derartige Zeit- und/oder Anwesenheitserfassungseinrichtung und ein Serversystem. Ferner betrifft die Erfindung ein Computerprogrammprodukt.

Zeit- und/oder Anwesenheitserfassungseinrichtungen sind allgemein bekannt und dienen beispielsweise zur Erfassung und zum Nachhalten der Arbeitszeiten von in einem Unternehmen beschäftigten Personen. Auch für andere Personen, beispielsweise externe Dienstleister, können derartige Vorrichtungen Anwendung finden. Solche Zeit- und/oder Anwesenheitserfassungseinrichtungen sind häufig im Eingangsbereich von Gebäuden angebracht, sodass die Beschäftigten die Vorrichtungen zu Beginn ihrer Arbeitszeit und zum Ende ihrer Arbeitszeit erreichen.

US 2015/0170104 A1 offenbart eine Zeit- und Anwesenheitsverwaltungsvorrichtung, die enthält: eine Steuereinheit, die eine Anwendung startet, die eine Bildgebungsfunktion auf einem mobilen Endgerät verwendet, indem sie dem mobilen Endgerät mit der Bildgebungsfunktion erlaubt, drahtlos mit einer Relaisvorrichtung zu kommunizieren, die an einem Ort vorgesehen ist, an dem ein Benutzer ankommt und den der Benutzer verlässt; eine Bildgebungseinheit, die das Gesicht des Benutzers unter Verwendung der Bildgebungsfunktion mittels der von der Steuereinheit gestarteten Anwendung abbildet; eine Extraktionseinheit, die aus dem aufgenommenen Bild erkannte Gesichtsbilddaten des Benutzers erfasst und aus den Gesichtsbilddaten des Benutzers Merkmalspunktdaten extrahiert; und eine Aufzeichnungseinheit, die auf der Grundlage der Merkmalspunktdaten Zeit- und Anwesenheitsinformationen des Benutzers als Zeit- und Anwesenheitsinformationen in einer Zeit- und Anwesenheitsinformationsspeichereinheit zusammen mit der aktuellen Zeit aufzeichnet. Das Zeit- und Anwesenheitsmanagementsystem umfasst ein Servergerät, das mit dem mobilen Endgerät und der Relaisvorrichtung über ein Netzwerk kommunizieren kann, und eine Datenbank, die mit dem Servergerät verbunden ist.

US 2017/0024683 A1 offenbart ein System und ein Verfahren zur Erfassung der Zeit und Anwesenheit einer Person an einem Arbeitsplatz. Das System umfasst ein Standortverfolgungssystem, das das Vorhandensein eines von der Person getragenen tragbaren elektronischen Geräts erkennt, ein Stechuhrsystem, das die Abwesenheitsregistrierungszeit der Person am Arbeitsplatz aufzeichnet, und ein Hauptsteuergerät. Wenn das Hauptsteuergerät eine elektronische Mitteilung empfängt, die anzeigt, dass sich das tragbare elektronische Gerät in einem vordefinierten Pausen- oder Nichtarbeitsbereich befindet, und wenn das Hauptsteuergerät keine Aufzeichnung der individuellen Abwesenheitsregistrierungszeit im Stechuhrsystem feststellt, dann löst das Hauptsteuergerät automatisch einen Alarm am tragbaren elektronischen Gerät aus, der die Person auffordert, ein Rückmeldesignal zu senden, das die Notwendigkeit der Aufzeichnung der Abwesenheitsregistrierungszeit bestätigt. Das Standortverfolgungssystem umfasst einen Haupt-Standortverfolgungscomputer oder -computerserver, der mit einem stationären Gerät (z. B. Sender-Empfänger) kommuniziert, das in der Lage ist, mit dem tragbaren elektronischen Gerät hin und her zu kommunizieren.

An die Handhabung und das Nachhalten von personenbezogenen Daten werden dabei immer höhere Anforderungen gestellt, um beispielsweise einen entsprechenden Datenschutz zu gewährleisten. Geleichzeitig arbeiten immer mehr Menschen mobil an verschiedenen Orten.

Es besteht daher Bedarf an Systemen, die eine zuverlässige Zeit- und Anwesenheitserfassung ermöglichen und die gleichzeitig effizient funktionieren, um unnötige Wartezeiten für die Nutzer, beispielsweise an einem Zeiterfassungsterminal, zu vermeiden, insbesondere zu Stoßzeiten oder typischen Zeiten für Schichtwechsel morgens oder abends.

Vor diesem Hintergrund stellt sich die Aufgabe, ein vorteilhaftes Verfahren zum Betreiben einer Zeit- und/oder Anwesenheitserfassungseinrichtung bereitzustellen, mit dem geringe Wartezeiten erreichbar sind und/oder Verzögerungen oder Probleme bei der Nutzung der Zeit- und/oder Anwesenheitserfassungseinrichtung verringert werden können. Es stellt sich ferner die Aufgabe, eine entsprechende Zeit- und/oder Anwesenheitserfassungseinrichtung und ein entsprechendes Serversystem bereitzustellen.

Die Aufgabe wird gelöst durch ein Verfahren zum Betreiben einer Zeit- und/oder Anwesenheitserfassungseinrichtung, wobei die Zeit- und/oder Anwesenheitserfassungseinrichtung eine Kommunikationsschnittstelle zur Kommunikation mit einem Serversystem über eine Kommunikationsverbindung aufweist,
wobei das Verfahren zumindest den folgenden Schritt umfasst:
a)
   --- Empfangen und/oder Abrufen von Daten von dem Serversystem durch die Zeit- und/oder Anwesenheitserfassungseinrichtung in festgelegten Zeiträumen; und/oder
   --- Übermitteln von Daten von der Zeit- und/oder Anwesenheitserfassungseinrichtung an das Serversystem in den festgelegten Zeiträumen.

Erfindungsgemäß kann hierdurch eine vorteilhafte Effizienz für die Verwendung einer Zeit- und/oder Anwesenheitserfassungseinrichtung, insbesondere zur Zeitund/oder Anwesenheitserfassung von Personen, beispielsweise von Angestellten eines Unternehmens, erreicht werden.

Erfindungsgemäß kann vorteilhafterweise vermieden werden, dass die Zeitund/oder Anwesenheitserfassungseinrichtung in relevanten Zeiträumen, beispielswiese zu Stoßzeiten, in denen viele Personen gleichzeitig oder in schneller Abfolge Interaktionen mit den Zeit- und/oder Anwesenheitserfassungseinrichtungen eines Gebäudes und/oder Areals durchführen, Daten über ein Kommunikationsnetz erhält oder abruft. Hierdurch kann einerseits die Auslastung der Zeit- und/oder Anwesenheitserfassungseinrichtung, insbesondere die Auslastung der Computermittel der Zeit- und/oder Anwesenheitserfassungseinrichtung, zu Stoßzeiten verringert werden. Des Weiteren kann die Auslastung einer Kommunikationsverbindung zwischen dem Serversystem und der Zeit- und/oder Anwesenheitserfassungseinrichtung, beispielsweise eines Unternehmensnetzwerks, zu Stoßzeiten verringert werden, um eine möglichst fehlerfreie Funktion von Buchungen bzw. Nutzerinteraktionen an der Zeitund/oder Anwesenheitserfassungseinrichtung während solcher Stoßzeiten zu ermöglichen.

Insbesondere ist es erfindungsgemäß möglich, dass "festgelegte Zeiträume" festgelegt werden, in denen eine Datenübertragung von einem Serversystem an die Zeit- und/oder Anwesenheitserfassungseinrichtung erfolgt. Die gemäß Schritt a) verwendeten festgelegten Zeiträume sind dabei vorzugsweise solche Zeiträume, in denen die Zeit- und/oder Anwesenheitserfassungseinrichtung nicht oder nur wenig genutzt wird, beispielsweise nachts oder an Wochenenden. In diesen festgelegten Zeiträume, in denen die Zeit- und/oder Anwesenheitserfassungseinrichtung und/oder ein Kommunikationsnetz zwischen der Zeit- und/oder Anwesenheitserfassungseinrichtung und einem Serversystem wenig genutzt wird, kann die Zeit- und/oder Anwesenheitserfassungseinrichtung in vorteilhafter Weise Daten empfangen und/oder abrufen, ohne dass hierdurch unnötige Wartezeiten für potentielle Nutzer der Zeit- und/oder Anwesenheitserfassungseinrichtung oder eine potentiell problematische Belastung für ein Kommunikationsnetz bzw. Kommunikationssystem des Unternehmens entstehen.

Es ist gemäß einer Ausgestaltung der vorliegenden Erfindung besonders vorteilhaft denkbar, dass das Empfangen und/oder Abrufen von Daten von dem Serversystem durch die Zeit- und/oder Anwesenheitserfassungseinrichtung ausschließlich in festgelegten Zeiträumen erfolgt, insbesondere derart, dass außerhalb der festgelegten Zeiträume ein Empfangen und/oder Abrufen von Daten durch die Zeit- und/oder Anwesenheitserfassungseinrichtung von dem Serversystem unterbunden wird.

Es ist gemäß einer Ausgestaltung der vorliegenden Erfindung besonders vorteilhaft denkbar, dass das Übermitteln von Daten von der Zeit- und/oder Anwesenheitserfassungseinrichtung an das Serversystem ausschließlich in festgelegten Zeiträumen erfolgt, insbesondere derart, dass außerhalb der festgelegten Zeiträume das Übermitteln von Daten von der Zeit- und/oder Anwesenheitserfassungseinrichtung an das Serversystem unterbunden wird.

Das erfindungsgemäße Verfahren ist insbesondere ein computerimplementiertes Verfahren, bei dem ein, mehrere oder alle Schritte des Verfahrens computerimplementiert ausgeführt werden.

Es ist gemäß einer Ausführungsform der vorliegenden Erfindung denkbar, dass die Zeit- und/oder Anwesenheitserfassungseinrichtung einen lokalen Speicher aufweist oder mit einem lokalen Speicher verbunden ist. Der lokale Speicher ist vorzugsweise ein nichtflüchtiger Speicher. Es ist denkbar, dass der lokale Speicher durch eine oder mehrere Speichereinheiten gebildet ist. In dem lokalen Speicher sind Daten speicherbar.

Vorzugsweise sind in dem lokalen Speicher Daten speicherbar, die die Zeitund/oder Anwesenheitserfassungseinrichtung von dem Serversystem empfängt oder abruft. Vorzugsweise sind in dem lokalen Speicher Daten speicherbar, die die Zeit- und/oder Anwesenheitserfassungseinrichtung in Folge von Nutzerinteraktionen mit der Zeit- und/oder Anwesenheitserfassungseinrichtung generiert oder empfängt, beispielsweise Zeitinformationen, betreffend einen Zeitpunkt zu dem eine Nutzerinterkation mit der Zeit- und/oder Anwesenheitserfassungseinrichtung stattfindet. Es ist denkbar, dass in dem lokalen Speicher personenbezogene Daten speicherbar sind, beispielswiese zur Anwesenheitserfassung und/oder Arbeitszeiterfassung von Personen. Vorzugsweise sind in dem lokalen Speicher Daten speicherbar, die eine Person über eine Eingabeeinrichtung der Zeit- und/oder Anwesenheitserfassungseinrichtung eingibt.

Es ist gemäß einer Ausführungsform der vorliegenden Erfindung denkbar, dass eine Person über eine Eingabeeinrichtung der Zeit- und/oder Anwesenheitserfassungseinrichtung personenbezogene Daten eingeben und/oder ändern kann. Es ist denkbar, dass einer Person über eine Wiedergabeeinrichtung der Zeit- und/oder Anwesenheitserfassungseinrichtung, beispielsweise über einen Bildschirm, personenbezogene Daten angezeigt werden können. Es ist somit denkbar, dass die Person über die Zeit- und/oder Anwesenheitserfassungseinrichtung auf ihre personenbezogenen Daten zugreifen kann und beispielsweise Urlaubstage eintragen oder anfragen kann oder ihre Personalstammdaten einsehen oder ändern kann. Es ist ferner denkbar, dass eine Person über die Zeit- und/oder Anwesenheitserfassungseinrichtung mit einer Personalabteilung des Unternehmens kommunizieren kann, dem die Zeitund/oder Anwesenheitserfassungseinrichtung zugeordnet ist. Beispielsweise ist es denkbar, dass Nachrichten der Personalabteilung des Unternehmens an die Person auf der Wiedergabeeinrichtung der Zeit- und/oder Anwesenheitserfassungseinrichtung anzeigbar sind und/oder dass die Person mithilfe der Eingabeeinrichtung der Zeit- und/oder Anwesenheitserfassungseinrichtung Nachrichten an die Personalabteilung des Unternehmens erzeugen kann.

Vorteilhafte Weiterbildungen und Ausgestaltungen der vorliegenden Erfindung können den abhängigen Ansprüchen entnommen werden.

Gemäß einer Ausführungsform der vorliegenden Erfindung ist es vorgesehen, dass die festgelegten Zeiträume:
- in Abhängigkeit einer Auslastung der Kommunikationsverbindung zwischen dem Serversystem und der Zeit- und/oder Anwesenheitserfassungseinrichtung; und/oder

- in Abhängigkeit einer Auslastung des Serversystems; und/oder
- in Abhängigkeit einer Auslastung der Zeit- und/oder Anwesenheitserfassungseinrichtung
   festgelegt und/oder angepasst werden, insbesondere zumindest einmal oder zumindest teilweise vor Schritt a). Die festgelegten Zeiträume können vorzugsweise automatisiert und/oder dynamisch an:
- Änderungen der Auslastung der Kommunikationsverbindung zwischen dem Serversystem und der Zeit- und/oder Anwesenheitserfassungseinrichtung; und/oder
- Änderungen der Auslastung des Serversystems; und/oder
- Änderungen der Auslastung der Zeit- und/oder Anwesenheitserfassungseinrichtung angepasst werden. Es kann somit ein vorteilhafter und flexibler Lernprozess eingerichtet werden. Die Festlegung und/oder Anpassung der festgelegten Zeiträume kann durch die Zeit- und/oder Anwesenheitserfassungseinrichtung und/oder durch das Serversystem erfolgen. Besonders bevorzugt ist die Zeitund/oder Anwesenheitserfassungseinrichtung an der Festlegung und/oder Anpassung der festgelegten Zeiträume zumindest beteiligt. Gemäß einer Ausführungsform der vorliegenden Erfindung ist es denkbar, dass das Festlegen und/oder Anpassen der festgelegten Zeiträume mithilfe einer künstlichen Intelligenz und/oder mithilfe von maschinellem Lernen erfolgt.

Es ist denkbar, dass die Auslastung der Kommunikationsverbindung zwischen dem Serversystem und der Zeit- und/oder Anwesenheitserfassungseinrichtung die Auslastung eines Kommunikationsnetzes, beispielsweise eines unternehmensinternen Netzwerks, betrifft. Dieses Kommunikationsnetz kann beispielsweise mithilfe eines LAN oder eines WLAN ausgebildet sein. Für die Kommunikationsverbindung zwischen dem Serversystem und der Zeit- und/oder Anwesenheitserfassungseinrichtung bzw. das Kommunikationsnetz kommen eine Vielzahl drahtloser und/oder drahtgebundener Kommunikationstechniken und/oder -protokolle in Frage. Es ist denkbar, dass die Auslastung der Kommunikationsverbindung zwischen dem Serversystem und der Zeit- und/oder Anwesenheitserfassungseinrichtung eine Netzwerkauslastung der Kommunikationsverbindung bzw. des Kommunikationsnetztes betrifft. Die Netzwerkauslastung ist vorzugsweise das Verhältnis des gegenwärtigen Netzwerkdatenverkehrs zur maximalen Datenverkehrsmenge, die gehandhabt werden kann. Die Netzwerkauslastung zeigt somit vorzugsweise den Bandbreitenverbrauch im Kommunikationsnetz an.

Gemäß einer Ausführungsform der vorliegenden Erfindung ist es vorgesehen, dass das Verfahren ferner umfasst:
b 1)--- Erfassen und/oder Analysieren:
- einer Auslastung der Kommunikationsverbindung zwischen dem Serversystem und der Zeit- und/oder Anwesenheitserfassungseinrichtung; und/oder
- einer Auslastung des Serversystems, insbesondere mithilfe des Serversystems, wobei - durch das Serversystem - in Abhängigkeit der erfassten und/oder analysierten Auslastung der Kommunikationsverbindung und/oder des Serversystems Übertragungszeiträume ermittelt werden. Diese "Übertragungszeiträume" stellen somit serverseitig bzw. netzwerkseitig ermittelte Zeiträume dar, in denen eine Datenübertragung zwischen der Zeitund/oder Anwesenheitserfassungseinrichtung und dem Serversystem in Anbetracht der Analyse in Schritt b1) vorteilhaft erscheint, insbesondere weil die Kommunikationsverbindung zwischen dem Serversystem und der Zeit- und/oder Anwesenheitserfassungseinrichtung, beispielsweise ein unternehmensinternes Kommunikationsnetz, in diesen Übertragungszeiträumen eine geringe Netzwerkauslastung aufweist.

Gemäß einer Ausführungsform der vorliegenden Erfindung ist es vorgesehen, dass die Übertragungszeiträume derart in Abhängigkeit der erfassten und/oder analysierten Auslastung der Kommunikationsverbindung und/oder des Serversystems ermittelt werden, dass die Übertragungszeiträume solche Zeiträume umfassen oder sind, in denen die Auslastung der Kommunikationsverbindung und/oder des Serversystems unterhalb eines wählbaren Schwellenwerts liegt. Hierdurch können besonders vorteilhaft serverseitig bzw. netzwerkseitig geeignete Übertragungszeiträume ermittelt werden.

Gemäß einer Ausführungsform der vorliegenden Erfindung ist es vorgesehen, dass eine Information zur Mitteilung der ermittelten Übertragungszeiträume von dem Serversystem an die Zeit- und/oder Anwesenheitserfassungseinrichtung übermittelt wird. Die aus Sicht des Serversystems bzw. des Kommunikationsnetzes geeigneten Übertragungszeiträume zur Datenübertragung zwischen dem Serversystem und der Zeit- und/oder Anwesenheitserfassungseinrichtung können somit der Zeit- und/oder Anwesenheitserfassungseinrichtung mitgeteilt werden, sodass die Zeit- und/oder Anwesenheitserfassungseinrichtung Kenntnis davon erlangt, welche Übertragungszeiträume aus Sicht des Serversystems bzw. des Netzwerks besonders geeignet sind. Die Zeit- und/oder Anwesenheitserfassungseinrichtung kann auf Grundlage der ihr mitgeteilten Übertragungszeiträume in vorteilhafter Weise die festgelegten Zeiträume festlegen und/oder anpassen. In einer solchen Ausführungsform sind an der Festlegung und/oder Anpassung der festgelegten Zeiträume vorzugsweise sowohl die Zeit- und/oder Anwesenheitserfassungseinrichtung als auch das Serversystem beteiligt.

Gemäß einer Ausführungsform der vorliegenden Erfindung ist es vorgesehen, dass die festgelegten Zeiträume in Schritt a):
- entweder den ermittelten Übertragungszeiträumen entsprechen,
- oder in Abhängigkeit der ermittelten Übertragungszeiträume festgelegt und/oder angepasst werden, vorzugsweise durch die Zeit- und/oder Anwesenheitserfassungseinrichtung, insbesondere derart, dass die festgelegten Zeiträume innerhalb der ermittelten Übertragungszeiträume liegen.

Es ist gemäß einer Ausgestaltung der vorliegenden Erfindung somit denkbar, dass die festgelegten Zeiträume den Übertragungszeiträumen entsprechen. Die durch das Serversystem ermittelten Übertragungszeiträume werden somit insbesondere als festgelegte Zeiträume in Schritt a) verwendet.

Alternativ ist es gemäß einer Ausgestaltung der vorliegenden Erfindung denkbar, dass die Zeit- und/oder Anwesenheitserfassungseinrichtung in Abhängigkeit der ihr mitgeilten Übertragungszeiträume die festgelegten Zeiträume selbst festlegt und/oder anpasst. Gemäß einer solchen Ausgestaltung der vorliegenden Erfindung kann die Zeit- und/oder Anwesenheitserfassungseinrichtung in vorteilhafter Weise ihre eigene Auslastung bei der Festlegung und/oder Anpassung der festgelegten Zeiträume zur Datenübertragung berücksichtigen.

Das Verfahren umfasst ferner:
b2)--- Erfassen und/oder Analysieren einer Auslastung der Zeit- und/oder Anwesenheitserfassungseinrichtung, wobei die festgelegten Zeiträume in Abhängigkeit der erfassten und/oder analysierten Auslastung der Zeit- und/oder Anwesenheitserfassungseinrichtung festgelegt und/oder angepasst werden. Es insbesondere denkbar, dass die Zeit- und/oder
Anwesenheitserfassungseinrichtung ihre eigene Auslastung erfasst und/oder analysiert, wobei die Zeit- und/oder Anwesenheitserfassungseinrichtung anhand dieser Erfassung und/oder Analyse lernt, in welchen Zeiträumen ihre Auslastung bzw. Benutzung gering ist, beispielsweise unterhalb eines Schwellenwerts, und solche Zeiträume als "festgelegte Zeiträume" festlegt. Es ist gemäß einer Ausführungsform der vorliegenden Erfindung denkbar, dass die Schritte b1) und b2) kombiniert werden, insbesondere derart, dass eine Festlegung und/oder Anpassung der festgelegten Zeiträume gemeinsam durch das Serversystem und die Zeit- und/oder Anwesenheitserfassungseinrichtung erfolgt. Es ist alternativ denkbar, dass die Festlegung und/oder Anpassung der festgelegten Zeiträume eigenständig durch die Zeit- und/oder Anwesenheitserfassungseinrichtung durchgeführt wird, beispielsweise dadurch, dass auf Schritt b1) verzichtet wird.

Es ist vorgesehen, dass das Erfassen und/oder Analysieren der Auslastung der Zeit- und/oder Anwesenheitserfassungseinrichtung in Schritt b2) umfasst:
- Erfassen und/oder Analysieren einer Anzahl an Nutzerinteraktionen mit der Zeit- und/oder Anwesenheitserfassungseinrichtung in einer festlegbaren Zeitspanne, wobei in Abhängigkeit der erfassten und/oder analysierten Anzahl an Nutzerinteraktionen mit der Zeit- und/oder
   Anwesenheitserfassungseinrichtung die festgelegten Zeiträume festgelegt und/oder angepasst werden. Hierdurch kann die Nutzungsfrequenz der Zeitund/oder Anwesenheitserfassungseinrichtung und somit deren Auslastung in besonders vorteilhafter Weise bei der Festlegung und/oder Anpassung der festgelegten Zeiträume berücksichtigt werden.

Gemäß einer Ausführungsform der vorliegenden Erfindung ist es vorgesehen, dass die festgelegten Zeiträume derart in Abhängigkeit der erfassten und/oder analysierten Anzahl an Nutzerinteraktionen mit der Zeit- und/oder Anwesenheitserfassungseinrichtung festgelegt und/oder angepasst werden, dass die festgelegten Zeiträume solche Zeiträume umfassen oder sind, in denen die Anzahl an Nutzerinteraktionen mit der Zeit- und/oder Anwesenheitserfassungseinrichtung in einer festlegbaren Zeitspanne unterhalb eines wählbaren Schwellenwerts liegt. Hierdurch kann eine besonders vorteilhafte Festlegung und/oder Anpassung der festgelegten Zeiträume erfolgen, vorzugsweise mithilfe der Zeit- und/oder Anwesenheitserfassungseinrichtung.

Gemäß einer Ausführungsform der vorliegenden Erfindung ist es vorgesehen, dass die Schritte b1) und/oder b2) kontinuierlich durchgeführt werden oder in regelmäßigen oder unregelmäßigen Abständen wiederholt werden, vorzugsweise wobei Schritt b1) und/oder Schritt b2) zumindest einmal oder zumindest teilweise vor Schritt a) durchgeführt werden.

Gemäß einer Ausführungsform der vorliegenden Erfindung ist es vorgesehen, dass die Schritte des Verfahrens, insbesondere der Schritt a) sowie der Schritt b1) und/oder der Schritt b2), einmal oder mehrmals wiederwohl werden, insbesondere zu verschiedenen Zeitpunkten während der Verwendung der Zeitund/oder Anwesenheitserfassungseinrichtung. Es ist insbesondere denkbar, dass das Analysieren in Schritt b1) und/oder Schritt b2) mehrfach oder kontinuierlich durchgeführt wird, sodass die festgelegten Zeiträume in Abhängigkeit der Analyse in Schritt b1) und/oder Schritt b2) aktualisiert, geändert und/oder angepasst werden.

Gemäß einer Ausführungsform der vorliegenden Erfindung ist es vorgesehen, dass die Daten:
- personenbezogene Daten, insbesondere Personalstammdaten; und/oder
- Firmware-Daten und/oder Software-Daten für die Zeit- und/oder Anwesenheitserfassungseinrichtung

umfassen. Die Firmware-Daten und/oder Software-Daten können beispielsweise Daten zur Konfiguration und/der Installation eines Betriebssystems und/oder eines Anwendungsprogramms der Zeit- und/oder
Anwesenheitserfassungseinrichtung umfassen. Die personenbezogenen Daten können beispielsweise Zeitinformationen zur Anwesenheitserfassung und/oder Arbeitszeiterfassung umfassen.

Besonders bevorzugt ist es denkbar, dass
--- dass die in Schritt a) durch die Zeit- und/oder
   Anwesenheitserfassungseinrichtung von dem Serversystem empfangenen und/oder abgerufenen Daten:
   - personenbezogene Daten, insbesondere Personalstammdaten; und/oder
   - Firmware-Daten und/oder Software-Daten für die Zeit- und/oder Anwesenheitserfassungseinrichtung
      umfassen; und/oder
--- dass die in Schritt a) von der Zeit- und/oder
   Anwesenheitserfassungseinrichtung an das Serversystem übermittelte Daten personenbezogene Daten, insbesondere Personalstammdaten, umfassen.

Unter personenbezogenen Daten können gemäß einer Ausführungsform der vorliegenden Erfindung insbesondere Daten verstanden werden, die derart personenbezogen sind, dass sie eindeutig einer bestimmten natürlichen Person zugeordnet sind oder diese Zuordnung zumindest mittelbar erfolgen kann. Die personenbezogenen Daten können erfindungsgemäß daher auch personenbeziehbare Daten umfassen. Es ist denkbar, dass personenbezogene Daten gemäß einer Ausführungsform der vorliegenden Erfindung Personalstammdaten umfassen. Gemäß einer Ausführungsform der vorliegenden Erfindung ist es denkbar, dass die personenbezogenen Daten ein personenbezogenes Arbeitszeitprofil, insbesondere zur Erfassung von Anwesenheitszeiten und/oder Arbeitszeiten pro Person, umfassen.

Es ist erfindungsgemäß bevorzugt denkbar,
dass personenbezogene Daten in dem lokalen Speicher der Zeit- und/oder Anwesenheitserfassungseinrichtung verschlüsselt, beispielsweise kennwortverschlüsselt, gespeichert sind, und/oder
dass personenbezogene Daten mithilfe der Zeit- und/oder Anwesenheitserfassungseinrichtung nur unter Verwendung einer Verschlüsselung, beispielswiese einer Kennwortverschlüsselung, abrufbar oder durch die Zeit- und/oder Anwesenheitserfassungseinrichtung anzeigbar bzw. darstellbar sind, beispielsweise auf einem Bildschirm der Zeit- und/oder Anwesenheitserfassungseinrichtung. Auch andere oder zusätzliche Schlüssel- bzw. Verschlüsselungsfunktionen sind denkbar. Hierdurch kann ein vorteilhafter Datenschutz erreicht werden.

Ein weiterer Gegenstand der vorliegenden Erfindung ist eine Zeit- und/oder Anwesenheitserfassungseinrichtung zur Zeit- und/oder Anwesenheitserfassung von Personen, wobei die Zeit- und/oder Anwesenheitserfassungseinrichtung eine Kommunikationsschnittstelle zur Kommunikation mit dem Serversystem über eine Kommunikationsverbindung aufweist,
wobei die Zeit- und/oder Anwesenheitserfassungseinrichtung zur Ausführung eines Verfahrens gemäß einer Ausführungsform der vorliegenden konfiguriert ist.

Die erfindungsgemäße Zeit- und/oder Anwesenheitserfassungseinrichtung weist insbesondere Computermittel auf, mit deren Hilfe die Konfiguration der Zeitund/oder Anwesenheitserfassungseinrichtung implementiert ist. Die erfindungsgemäße Zeit- und/oder Anwesenheitserfassungseinrichtung ist insbesondere zur Ausführung der durch die Zeit- und/oder Anwesenheitserfassungseinrichtung durchgeführten Schritte eines Verfahrens gemäß einer Ausführungsform der vorliegenden Erfindung konfiguriert.

Die erfindungsgemäße Zeiterfassungseinrichtung und/oder Anwesenheitserfassungseinrichtung kann insbesondere als Arbeitszeiterfassungseinrichtung zur Erfassung von Arbeitszeiten von Personen ausgebildet sein.

Die erfindungsgemäße Zeit- und/oder Anwesenheitserfassungseinrichtung ist vorzugsweise in oder an einem Gebäude und/oder Areal anbringbar, aufstellbar und/oder montierbar. Als Gebäude und/oder Areal kann gemäß der vorliegenden Erfindung insbesondere auch ein Standort eines Unternehmens verstanden werden.

Gemäß einer Ausführungsform der vorliegenden Erfindung ist es vorgesehen, dass die Zeit- und/oder Anwesenheitserfassungseinrichtung - bei einer Nutzerinteraktion einer Person mit der Zeit- und/oder Anwesenheitserfassungseinrichtung - zur Erfassung einer Zeitinformation, betreffend die Nutzerinteraktion, konfiguriert ist,
wobei die erfasste Zeitinformation zur Erfassung von Anwesenheitszeiten und/oder Arbeitszeiten dieser Person eingerichtet ist. Die erfasste Zeitinformation kann beispielsweise in dem lokalen Speicher der Zeit- und/oder Anwesenheitserfassungseinrichtung gespeichert werden und/oder als Teil der Daten in Schritt a) an das Serversystem übermittelt werden. Die bei der Nutzerinteraktion erfasste Zeitinformation bezieht sich dabei insbesondere auf den Zeitpunkt der Nutzerinteraktion. Hierdurch können Anwesenheitszeitund/oder Arbeitszeit-Profile für Personen in dem lokalen Speicher und/oder dem Serversystem hinterlegt sein, wobei die Anwesenheitszeiten und/oder Arbeitszeiten der Personen nachgehalten werden. Es ist denkbar, dass die in dem lokalen Speicher nachgehaltenen Anwesenheitszeiten und/oder Arbeitszeiten der Personen innerhalb der festgelegten Zeiträume, als Teil der Daten in Schritt a), von der Zeit- und/oder Anwesenheitserfassungseinrichtung an das Serversystem übermittelt werden. Hierdurch kann ein Update der Anwesenheitszeiten und/oder Arbeitszeiten von Personen in dem zentralen Serversystem erfolgen.

Für die Nutzerinteraktionen, die Personen mit der Zeit- und/oder Anwesenheitserfassungseinrichtung durchführen, kommen erfindungsgemäß unterschiedliche technische Ausgestaltungen in Frage. Es ist denkbar, dass die Nutzerinteraktion einer Person mit der Zeit- und/oder Anwesenheitserfassungseinrichtung ein Empfangen und/oder Auslesen einer Identifikationsinformation dieser Person durch die Zeit- und/oder Anwesenheitserfassungseinrichtung umfasst,
vorzugsweise wobei das Empfangen und/oder Auslesen der Identifikationsinformation dieser Person durch:
- eine Eingabeeinrichtung der Zeit- und/oder Anwesenheitserfassungseinrichtung; und/oder
- eine Kommunikationsschnittstelle der Zeit- und/oder Anwesenheitserfassungseinrichtung; und/oder
- einen Sensor der Zeit- und/oder Anwesenheitserfassungseinrichtung erfolgt. Als Sensor kommen beispielsweise optische Sensoren in Frage, wobei die Nutzerinteraktion das Auslesen einer ID-Karte einer Person durch einen solchen Sensor umfasst. Alternativ oder zusätzlich kann die Nutzerinteraktion beispielsweise mithilfe von RFID (radio-frequency identification) und/oder NFC (near field communication) erfolgen. Eine Person führt hierfür eine entsprechende RFID-Identifikationsinformation oder eine NFC-Identifikationsinformation mit und die Zeit- und/oder Anwesenheitserfassungseinrichtung liest die RFID-Identifikationsinformation oder eine NFC-Identifikationsinformation als Teil der Nutzerinteraktion aus.

Ein weiterer Gegenstand der vorliegenden Erfindung ist ein Serversystem zur Zeit- und/oder Anwesenheitserfassung von Personen, wobei das Serversystem zur Kommunikation mit einer Zeit- und/oder Anwesenheitserfassungseinrichtung über eine Kommunikationsverbindung konfiguriert ist,
wobei das Serversystem derart konfiguriert ist, dass:
--- das Serversystem Daten an die Zeit- und/oder Anwesenheitserfassungseinrichtung in festgelegten Zeiträumen übermittelt; und/oder
--- das Serversystem Daten von der Zeit- und/oder Anwesenheitserfassungseinrichtung in den festgelegten Zeiträumen empfängt, wobei das Serversystem vorzugsweise zur Ausführung eines Verfahrens nach einem der vorhergehenden Ansprüche konfiguriert ist.

Das erfindungsgemäße Serversystem weist insbesondere Computermittel auf. Das erfindungsgemäße Serversystem ist insbesondere zur Ausführung der durch das Serversystem durchgeführten Schritte eines Verfahrens gemäß einer Ausführungsform der vorliegenden Erfindung konfiguriert. Es ist gemäß einer Ausführungsform der vorliegenden Erfindung denkbar, dass das Serversystem mithilfe von einem oder mehreren Computern ausgebildet ist. Der eine oder die mehreren Computer des Serversystem können am gleichen Ort oder an unterschiedlichen Orten angeordnet sein. Das Serversystem ist insbesondere zur Kommunikation mit der Zeit- und/oder Anwesenheitserfassungseinrichtung über die Kommunikationsschnittstelle der Zeit- und/oder Anwesenheitserfassungseinrichtung konfiguriert. Die Kommunikation zwischen der Zeit- und/oder Anwesenheitserfassungseinrichtung kann drahtgebunden und/oder drahtlos erfolgen.

Ein weiterer Gegenstand der vorliegenden Erfindung ist ein System, umfassend eine Zeit- und/oder Anwesenheitserfassungseinrichtung gemäß einer Ausführungsform der vorliegenden Erfindung und ein Serversystem gemäß einer Ausführungsform der vorliegenden Erfindung. Die Zeit- und/oder Anwesenheitserfassungseinrichtung ist vorzugsweise an oder in einem Gebäude und/oder Areal angeordnet.

Gemäß einer Ausführungsform der vorliegenden Erfindung, insbesondere des erfindungsgemäßen Systems, ist es bevorzugt denkbar, ein unternehmensweites System zu implementieren, das zentral in einem Serversystem personenbezogene Daten der Mitarbeiterinnen und Mitarbeiter aufweist, wobei Zeit- und/oder Anwesenheitserfassungseinrichtungen, insbesondere Terminals, in festgelegten Zeiträumen die personenbezogenen Daten für den lokalen Standort, an dem sie angeordnet sind, von dem Serversystem erhalten bzw. beziehen und diese lokal in einem lokalen Speicher hinterlegen. Es ist dabei denkbar, dass die personenbezogenen Daten, die von den Zeit- und/oder Anwesenheitserfassungseinrichtungen bezogen werden, zusätzlich weiterhin in dem Serversystem gespeichert bleiben.

An dem Gebäude und/oder Areal bzw. dem Standort, an dem die Zeit- und/oder Anwesenheitserfassungseinrichtung angeordnet ist, können eine oder mehrere zusätzliche Zeit- und/oder Anwesenheitserfassungseinrichtung vorhanden sein. Diese sind vorzugsweise der Zeit- und/oder Anwesenheitserfassungseinrichtung entsprechend konfiguriert. Es ist denkbar, dass alle Zeit- und/oder Anwesenheitserfassungseinrichtung des gleichen Standorts die gleichen "festgelegten Zeiträume" für ihre Datenkommunikation mit dem Serversystem gemäß Schritt a) eines Verfahrens gemäß einer Ausführungsform der vorliegenden Erfindung verwenden, oder dass die "festgelegten Zeiträume" gemäß Schritt a) für eine, mehrere oder alle der Zeit- und/oder Anwesenheitserfassungseinrichtungen eines Standorts individuell festgelegt und/oder angepasst werden, insbesondere jeweils in Abhängigkeit der individuellen Auslastung einer Zeit- und/oder Anwesenheitserfassungseinrichtung.

Es ist ferner denkbar, dass weitere Zeit- und/oder Anwesenheitserfassungseinrichtungen an weiteren Gebäuden und/oder weiteren Arealen angeordnet sind. Auch für diese kann ein Verfahren gemäß einer Ausführungsform der vorliegenden Erfindung implementiert werden.

Ein weiterer Gegenstand der vorliegenden Erfindung ist ein Computerprogrammprodukt, umfassend Befehle, die bei der Ausführung durch Computermittel, insbesondere durch eine Zeit- und/oder Anwesenheitserfassungseinrichtung gemäß einer Ausführungsform der vorliegenden Erfindung und/oder durch ein Serversystem gemäß einer Ausführungsform der vorliegenden Erfindung, diese veranlassen, ein Verfahren gemäß einer Ausführungsform der vorliegenden Erfindung durchzuführen

Die Merkmale, Ausführungsformen und Vorteile, die im Zusammenhang mit einem der erfindungsgemäßen Gegenstände beschrieben worden sind, können jeweils auch für die weiteren erfindungsgemäßen Gegenstände Anwendung finden. Insbesondere können für die erfindungsgemäße Zeit- und/oder Anwesenheitserfassungseinrichtung, das erfindungsgemäße Serversystem, das erfindungsgemäße System, und das erfindungsgemäße Computerprogrammprodukt dabei die Merkmale, Ausführungsformen und Vorteile Anwendung finden, die bereits im Zusammenhang mit dem erfindungsgemäßen Verfahren oder im Zusammenhang mit einer Ausführungsform des erfindungsgemäßen Verfahrens beschrieben worden sind. Insbesondere können für das erfindungsgemäße Serversystem, das erfindungsgemäße System, das erfindungsgemäße Verfahren und das erfindungsgemäße Computerprogrammprodukt dabei die Merkmale, Ausführungsformen und Vorteile Anwendung finden, die bereits im Zusammenhang mit der erfindungsgemäßen Zeit- und/oder Anwesenheitserfassungseinrichtung oder im Zusammenhang mit einer Ausführungsform der erfindungsgemäßen Zeit- und/oder Anwesenheitserfassungseinrichtung beschrieben worden sind. Entsprechend können für die erfindungsgemäße Zeit- und/oder Anwesenheitserfassungseinrichtung, das erfindungsgemäße Serversystem, das erfindungsgemäße Verfahren und das erfindungsgemäße Computerprogrammprodukt die Merkmale, Ausführungsformen und Vorteile Anwendung finden, die bereits im Zusammenhang mit dem erfindungsgemäßen System oder im Zusammenhang mit einer Ausführungsform des erfindungsgemäßen Systems beschrieben worden sind.

Nachfolgend sollen weitere Vorteile und Einzelheiten der Erfindung anhand der in den Zeichnungen dargestellten Ausführungsbeispiele erläutert werden. Hierin zeigen
- Fig. 1: eine schematische Darstellung eines Systems gemäß einem Ausführungsbeispiel der vorliegenden Erfindung;
- Fig. 2: eine schematische Darstellung eines Systems gemäß einem Ausführungsbeispiel der vorliegenden Erfindung;
- Fig. 3: eine schematische Darstellung einer eine Zeit- und/oder Anwesenheitserfassungseinrichtung gemäß einem Ausführungsbeispiel der vorliegenden Erfindung;
- Fig. 4 bis 8: jeweils schematische Darstellungen von Verfahrenen gemäß Ausführungsbeispielen der vorliegenden Erfindung.

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird und/oder wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe "erste", "zweite", "dritte" und dergleichen in der Beschreibung und in den Ansprüchen zur Unterscheidung zwischen ähnlichen Elementen und nicht unbedingt zur Beschreibung einer sequentiellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

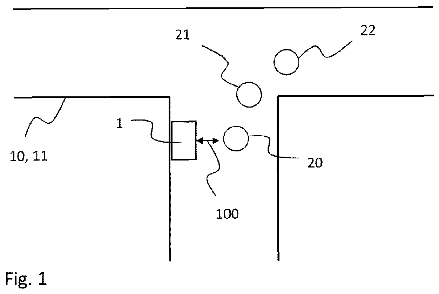

In **Fig. 1** ist ein System gemäß einem Ausführungsbeispiel der vorliegenden Erfindung gezeigt. Eine Zeit- und/oder Anwesenheitserfassungseinrichtung 1 zur Zeit- und/oder Anwesenheitserfassung von Personen 20, 21, 22 ist in einem Gebäude 10 oder Areal 11 angeordnet. Typischerweise befindet sich die Zeitund/oder Anwesenheitserfassungseinrichtung 1 in einem Eingangsbereich oder in Eingangsnähe des Gebäudes, sodass die Personen 20, 21, 22 beim Betreten oder Verlassen des Gebäudes 10 oder Areals 11 mit der Zeit- und/oder Anwesenheitserfassungseinrichtung 1 interagieren können. Bei dem Gebäude 10 oder Areal 11 kann es sich beispielsweise um ein Krankenhaus oder einen Gewerbebetrieb oder ein anderes Unternehmen handeln. Eine Nutzerinteraktion 100 einer Person 20 mit der Zeit- und/oder Anwesenheitserfassungseinrichtung 1 ist beispielhaft durch einen Pfeil dargestellt. Die Nutzerinterkationen können beispielsweise über einen Sensor der Zeit- und/oder Anwesenheitserfassungseinrichtung 1 identifiziert werden und umfassen typischerweise das Erkennen bzw. Auslesen einer Identifikationsinformation der Person 20, um die Anwesenheitszeiten oder Arbeitszeiten der Person 20 nachzuhalten. Es ist denkbar, dass die Person über die Zeit- und/oder Anwesenheitserfassungseinrichtung 1 auf ihre personenbezogenen Daten zugreifen kann und beispielsweise Urlaubstage eintragen oder anfragen kann oder ihre Personalstammdaten einsehen oder ändern kann. Es ist ferner denkbar, dass eine Person 20, 21, 22 über die Zeit- und/oder Anwesenheitserfassungseinrichtung 1 mit einer Personalabteilung des Unternehmens kommunizieren kann, dem die Zeit- und/oder Anwesenheitserfassungseinrichtung 1 zugeordnet ist.

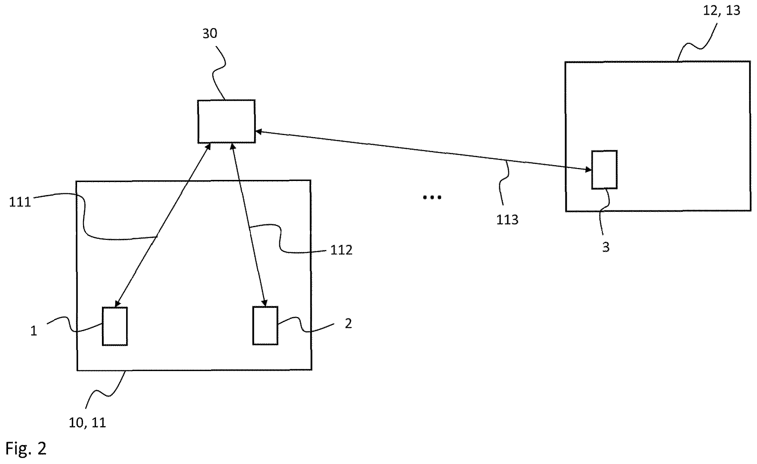

In **Fig. 2** ist ein System gemäß einem Ausführungsbeispiel der vorliegenden Erfindung gezeigt. In einem Gebäude 10 oder Areal 11 ist eine Zeit- und/oder Anwesenheitserfassungseinrichtung 1 angeordnet. Ferner ist in dem Gebäude 10 oder Areal 11 eine zusätzliche Zeit- und/oder Anwesenheitserfassungseinrichtung 2 angeordnet, die beispielsweise baugleich zu der Zeit- und/oder Anwesenheitserfassungseinrichtung 1 ausgebildet sein kann. Die Zeit- und/oder Anwesenheitserfassungseinrichtung 1 weist eine Kommunikationsschnittstelle auf, über die eine Kommunikationsverbindung 111 mit einem Serversystem 30 herstellbar ist. Die zusätzliche Zeit- und/oder Anwesenheitserfassungseinrichtung 2 weist ebenso eine Kommunikationsschnittstelle auf, über die eine Kommunikationsverbindung 112 mit einem Serversystem 30 herstellbar ist. Das Serversystem 30 kann innerhalb oder außerhalb des Gebäudes 10 oder Areals 11 angeordnet sein. Es ist denkbar, dass das Serversystem 30 einen oder mehrere Server umfasst, die an unterschiedlichen Orten bzw. Standorten angeordnet sind.

Ferner ist ein weiteres Gebäude 12 oder weiteres Areal 13 dargestellt, in dem eine weitere Zeit- und/oder Anwesenheitserfassungseinrichtung 3 angeordnet ist. Die weitere Zeit- und/oder Anwesenheitserfassungseinrichtung 3 ist insbesondere dem gleichen Unternehmen oder der gleichen Unternehmensgruppe zugeordnet wie die Zeit- und/oder Anwesenheitserfassungseinrichtung 1. Auch die weitere Zeit- und/oder Anwesenheitserfassungseinrichtung 3 weist eine Kommunikationsschnittstelle auf, über die eine Kommunikationsverbindung 113 mit einem Serversystem 30 herstellbar ist.

Die Kommunikationsverbindungen 111, 112, 113 können jeweils drahtlos und/oder drahtgebunden ausgebildet sein. Die Kommunikationsverbindungen 111, 112, 113 können insbesondere mithilfe eines internen Unternehmensnetzwerks ausgebildet sein.

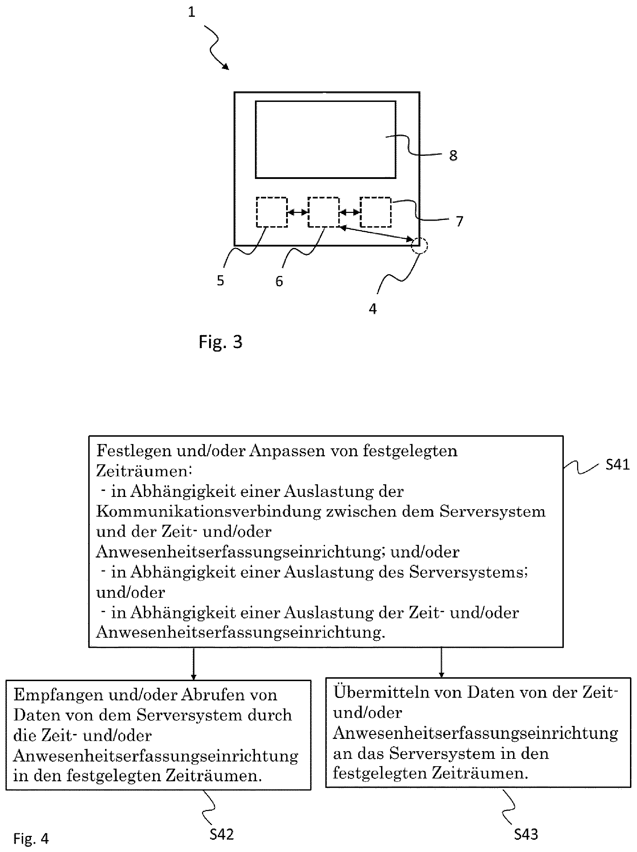

In **Fig. 3** ist schematisch eine Zeit- und/oder Anwesenheitserfassungseinrichtung 1 gemäß einem Ausführungsbeispiel der vorliegenden Erfindung gezeigt. Die Zeit- und/oder Anwesenheitserfassungseinrichtung 1 ist zur Zeit- und/oder Anwesenheitserfassung von Personen vorgesehen. Die Zeit- und/oder Anwesenheitserfassungseinrichtung 1 weist einen lokalen Speicher 5 sowie eine Kommunikationsschnittstelle 4 zur Kommunikation mit einem Serversystem 30 über eine Kommunikationsverbindung 111 auf. In dem lokalen Speicher 5 sind personenbezogene Daten speicherbar.

Ferner umfasst die die Zeit- und/oder Anwesenheitserfassungseinrichtung 1 eine interne Steuereinrichtung 6, insbesondere Computermittel, sowie einen Sensor 7 zur Detektion von Nutzerinteraktionen, die Nutzer an der Zeit- und/oder Anwesenheitserfassungseinrichtung 1 ausführen. Des Weiteren umfasst die Zeitund/oder Anwesenheitserfassungseinrichtung 1 einen Bildschirm 8, auf dem Informationen, beispielsweise personenbezogene Daten, dargestellt werden können. Der Bildschirm 8 kann gleichzeitig in Form eines Touchscreens als Eingabeeinrichtung ausgebildet sein. Es ist alternativ oder zusätzlich denkbar, dass die Zeit- und/oder Anwesenheitserfassungseinrichtung 1 eine von dem Bildschirm separate Eingabeeinrichtung, beispielsweise eine Tastatur oder Knöpfe, aufweist. Alternativ oder zusätzlich kann die Zeit- und/oder Anwesenheitserfassungseinrichtung 1 beispielsweise eine Signallampe aufweisen. Alternativ oder zusätzlich kann die Zeit- und/oder Anwesenheitserfassungseinrichtung 1 beispielsweise auch eine akustische Wiedergabeeinrichtung und/oder eine akustische Eingabeeinrichtung aufweisen.

Mithilfe der in den Figuren 1 bis 3 dargestellten Ausführungsbeispiele ist ein erfindungsgemäßes Verfahren implementierbar.

In Fig. 4 ist schematisch eine Darstellung eines Ausführungsbeispiels der vorliegenden Erfindung gezeigt. In einem Schritt S41 erfolgt ein Festlegen und/oder Anpassen von festgelegten Zeiträumen:
- in Abhängigkeit einer Auslastung der Kommunikationsverbindung zwischen dem Serversystem 30 und der Zeit- und/oder Anwesenheitserfassungseinrichtung 1; und/oder
- in Abhängigkeit einer Auslastung des Serversystems 30; und/oder
- in Abhängigkeit einer Auslastung der Zeit- und/oder Anwesenheitserfassungseinrichtung 1. In einem Schritt S42 erfolgt ein Empfangen und/oder Abrufen von Daten von dem Serversystem 30 durch die Zeit- und/oder Anwesenheitserfassungseinrichtung 1 in den festgelegten Zeiträumen. Alternativ oder zusätzlich zu Schritt S42 wird ein Schritt S42 durchgeführt. In Schritt S43 erfolgt ein Übermitteln von Daten von der Zeitund/oder Anwesenheitserfassungseinrichtung 1 an das Serversystem 30 in den festgelegten Zeiträumen.

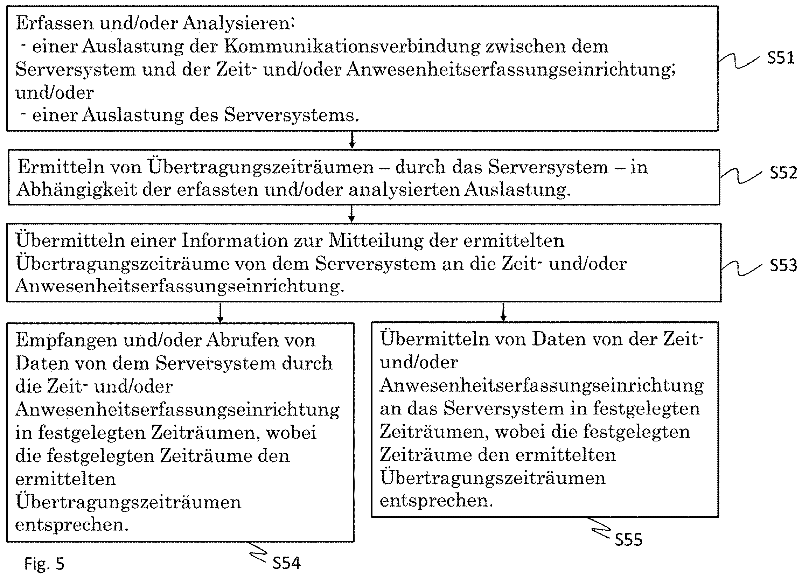

In **Fig. 5** ist schematisch eine Darstellung eines Ausführungsbeispiels der vorliegenden Erfindung gezeigt. In Schritt S51 erfolgt ein Erfassen und/oder Analysieren:
- einer Auslastung der Kommunikationsverbindung zwischen dem Serversystem 30 und der Zeit- und/oder Anwesenheitserfassungseinrichtung 1; und/oder
- einer Auslastung des Serversystems 30. Schritt S51 wird vorzugsweise mithilfe des Serversystems 30 durchgeführt. In einem Schritt S52 erfolgt ein Ermitteln von Übertragungszeiträumen - durch das Serversystem 30 - in Abhängigkeit der erfassten und/oder analysierten Auslastung. In Schritt S53 erfolgt ein Übermitteln einer Information zur Mitteilung der ermittelten Übertragungszeiträume von dem Serversystem 30 an die Zeit- und/oder Anwesenheitserfassungseinrichtung 1. In einem Schritt S54 erfolgt ein Empfangen und/oder Abrufen von Daten von dem Serversystem 30 durch die Zeit- und/oder Anwesenheitserfassungseinrichtung 1 in festgelegten Zeiträumen, wobei die festgelegten Zeiträume den ermittelten Übertragungszeiträumen entsprechen. Alternativ oder zusätzlich zu Schritt S54 wird ein Schritt S55 durchgeführt. In Schritt S55 erfolgt ein Übermitteln von Daten von der Zeitund/oder Anwesenheitserfassungseinrichtung 1 an das Serversystem 30 in festgelegten Zeiträumen, wobei die festgelegten Zeiträume den ermittelten Übertragungszeiträumen entsprechen.

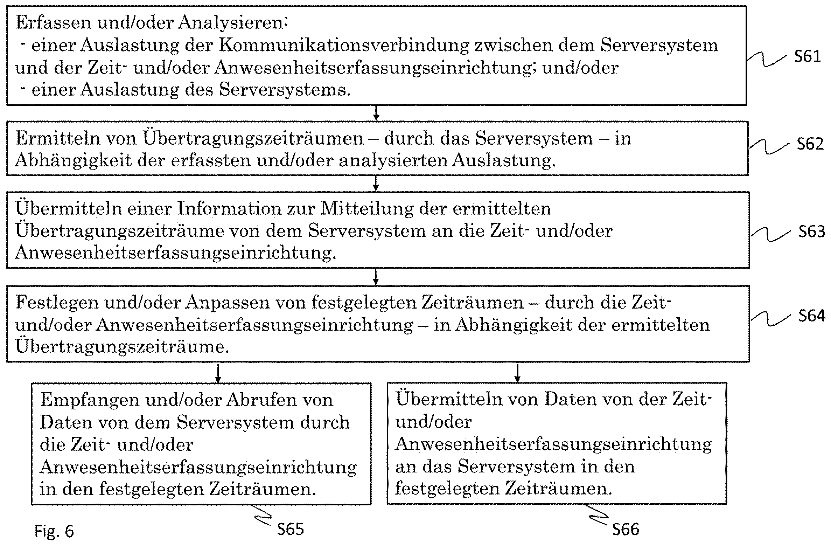

In **Fig. 6** ist schematisch eine Darstellung eines Ausführungsbeispiels der vorliegenden Erfindung gezeigt. In einem Schritt S61 erfolgt ein Erfassen und/oder Analysieren:
- einer Auslastung der Kommunikationsverbindung zwischen dem Serversystem 30 und der Zeit- und/oder Anwesenheitserfassungseinrichtung 1; und/oder
- einer Auslastung des Serversystems 30. Schritt S61 wird vorzugsweise mithilfe des Serversystems 30 durchgeführt. In einem Schritt S62 erfolgt ein Ermitteln von Übertragungszeiträumen - durch das Serversystem 30 - in Abhängigkeit der erfassten und/oder analysierten Auslastung. In einem Schritt S63 erfolgt ein Übermitteln einer Information zur Mitteilung der ermittelten Übertragungszeiträume von dem Serversystem 30 an die Zeit- und/oder Anwesenheitserfassungseinrichtung 1. In einem Schritt S64 erfolgt ein Festlegen und/oder Anpassen von festgelegten Zeiträumen - durch die Zeit- und/oder Anwesenheitserfassungseinrichtung 1 - in Abhängigkeit der ermittelten Übertragungszeiträume. In einem Schritt S65 erfolgt ein Empfangen und/oder Abrufen von Daten von dem Serversystem 30 durch die Zeit- und/oder Anwesenheitserfassungseinrichtung 1 in den festgelegten Zeiträumen. Alternativ oder zusätzlich zu Schritt S65 wird ein Schritt S66 durchgeführt. In Schritt S66 erfolgt ein Übermitteln von Daten von der Zeit- und/oder Anwesenheitserfassungseinrichtung 1 an das Serversystem 30 in den festgelegten Zeiträumen.

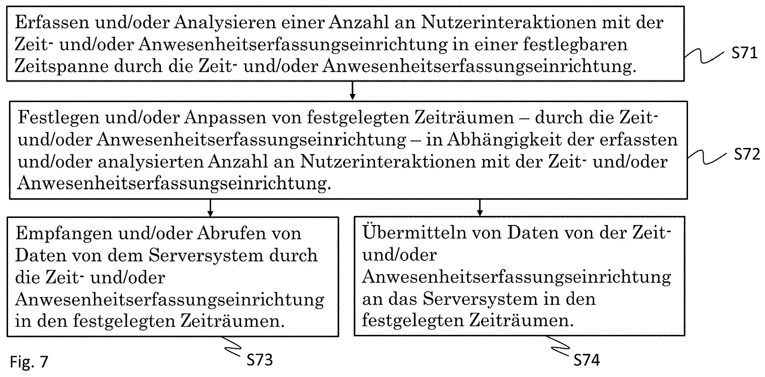

In **Fig. 7** ist schematisch eine Darstellung eines Ausführungsbeispiels der vorliegenden Erfindung gezeigt. In einem Schritt S71 erfolgt ein Erfassen und/oder Analysieren einer Anzahl an Nutzerinteraktionen mit der Zeitund/oder Anwesenheitserfassungseinrichtung 1 in einer festlegbaren Zeitspanne durch die Zeit- und/oder Anwesenheitserfassungseinrichtung 1. Hierdurch kann die Auslastung der Zeit- und/oder Anwesenheitserfassungseinrichtung 1 pro Zeitspanne ermittelt werden. In einem Schritt S72 erfolgt ein Festlegen und/oder Anpassen von festgelegten Zeiträumen - durch die Zeit- und/oder Anwesenheitserfassungseinrichtung 1 - in Abhängigkeit der erfassten und/oder analysierten Anzahl an Nutzerinteraktionen mit der Zeit- und/oder Anwesenheitserfassungseinrichtung 1. Die festgelegten Zeiträume können somit an die Auslastung der Zeit- und/oder Anwesenheitserfassungseinrichtung 1 angepasst werden. In einem Schritt S73 erfolgt ein Empfangen und/oder Abrufen von Daten von dem Serversystem 30 durch die Zeit- und/oder Anwesenheitserfassungseinrichtung 1 in den festgelegten Zeiträumen. Alternativ oder zusätzlich zu Schritt S73 wird ein Schritt S74 durchgeführt. In Schritt S74 erfolgt ein Übermitteln von Daten von der Zeit- und/oder Anwesenheitserfassungseinrichtung 1 an das Serversystem 30 in den festgelegten Zeiträumen.

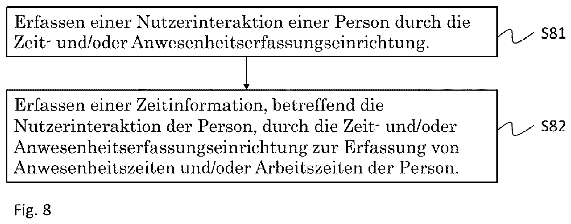

In **Fig. 8** ist schematisch eine Darstellung eines Ausführungsbeispiels der vorliegenden Erfindung gezeigt. Fig. 8 betrifft insbesondere die Erfassung von Buchungen bzw. Nutzerinteraktionen mithilfe einer erfindungsgemäßen Zeitund/oder Anwesenheitserfassungseinrichtung 1. In einem Schritt S81 erfolgt ein Erfassen einer Nutzerinteraktion einer Person durch die Zeit- und/oder Anwesenheitserfassungseinrichtung 1. In einem Schritt S82 erfolgt ein Erfassen einer Zeitinformation, betreffend die Nutzerinteraktion der Person, durch die Zeit- und/oder Anwesenheitserfassungseinrichtung 1 zur Erfassung von Anwesenheitszeiten und/oder Arbeitszeiten der Person. Derart erfasste Zeitinformationen und/oder weitere personenbezogene Daten können dann in festgelegten Zeiträumen von der Zeit- und/oder Anwesenheitserfassungseinrichtung 1 an das Serversystem 30 übermittelt werden.

Merkmale der in den Figuren 4 bis 8 dargestellten Ausführungsbeispiele können untereinander kombiniert werden.

### Bezugszeichenliste

- 1: Zeit- und/oder Anwesenheitserfassungseinrichtung
- 2: zusätzliche Zeit- und/oder Anwesenheitserfassungseinrichtung
- 3: weitere Zeit- und/oder Anwesenheitserfassungseinrichtung
- 4: Kommunikationsschnittstelle
- 5: lokaler Speicher
- 6: Steuereinrichtung
- 7: Sensor
- 8: Bildschirm
- 10: Gebäude
- 11: Areal
- 12: weiteres Gebäude
- 13: weiteres Areal
- 20 bis 22: Personen
- 30: Serversystem
- 100: Nutzerinteraktion
- 111 bis 113: Kommunikationsverbindungen
- S41 - S43: Schritte
- S51 - S55: Schritte
- S61 - S66: Schritte
- S71 - S74: Schritte
- S81 - S82: Schritte

## Patentansprüche

1. Verfahren zum Betreiben einer Zeit- und/oder Anwesenheitserfassungseinrichtung (1), wobei die Zeit- und/oder Anwesenheitserfassungseinrichtung (1) eine Kommunikationsschnittstelle (4) zur Kommunikation mit einem Serversystem (30) über eine Kommunikationsverbindung (111) aufweist,
wobei das Verfahren zumindest den folgenden Schritt umfasst:
a)
--- Empfangen und/oder Abrufen von Daten von dem Serversystem (30) durch die Zeit- und/oder Anwesenheitserfassungseinrichtung (1) in festgelegten Zeiträumen; und/oder
--- Übermitteln von Daten von der Zeit- und/oder Anwesenheitserfassungseinrichtung (1) an das Serversystem (30) in den festgelegten Zeiträumen,
wobei das Verfahren ferner umfasst:
b2)--- Erfassen und/oder Analysieren einer Auslastung der Zeitund/oder Anwesenheitserfassungseinrichtung (1), wobei die festgelegten Zeiträume in Abhängigkeit der erfassten und/oder analysierten Auslastung der Zeit- und/oder Anwesenheitserfassungseinrichtung festgelegt und/oder angepasst werden,
wobei das Erfassen und/oder Analysieren der Auslastung der Zeitund/oder Anwesenheitserfassungseinrichtung (1) in Schritt b2) umfasst:
- Erfassen und/oder Analysieren einer Anzahl an Nutzerinteraktionen mit der Zeit- und/oder Anwesenheitserfassungseinrichtung (1) in einer festlegbaren Zeitspanne, wobei in Abhängigkeit der erfassten und/oder analysierten Anzahl an Nutzerinteraktionen mit der Zeit- und/oder Anwesenheitserfassungseinrichtung (1) die festgelegten Zeiträume festgelegt und/oder angepasst werden.

2. Verfahren nach Anspruch 1, wobei die festgelegten Zeiträume:
- in Abhängigkeit einer Auslastung der Kommunikationsverbindung (111) zwischen dem Serversystem (30) und der Zeit- und/oder Anwesenheitserfassungseinrichtung (1); und/oder
- in Abhängigkeit einer Auslastung des Serversystems (30); und/oder
- in Abhängigkeit einer Auslastung der Zeit- und/oder Anwesenheitserfassungseinrichtung (1)
festgelegt und/oder angepasst werden, insbesondere zumindest einmal oder zumindest teilweise vor Schritt a).

3. Verfahren nach einem der vorhergehenden Ansprüche, wobei das Verfahren ferner umfasst:
b1)--- Erfassen und/oder Analysieren:
- einer Auslastung der Kommunikationsverbindung (111) zwischen dem Serversystem (30) und der Zeit- und/oder Anwesenheitserfassungseinrichtung (1); und/oder
- einer Auslastung des Serversystems (30),
insbesondere mithilfe des Serversystems (30),
wobei - durch das Serversystem (30) - in Abhängigkeit der erfassten und/oder analysierten Auslastung der Kommunikationsverbindung (111) und/oder des Serversystems (30) Übertragungszeiträume ermittelt werden.

4. Verfahren nach Anspruch 3, wobei die Übertragungszeiträume derart in Abhängigkeit der erfassten und/oder analysierten Auslastung der Kommunikationsverbindung (111) und/oder des Serversystems (30) ermittelt werden, dass die Übertragungszeiträume solche Zeiträume umfassen oder sind, in denen die Auslastung der Kommunikationsverbindung (111) und/oder des Serversystems (30) unterhalb eines wählbaren Schwellenwerts liegt.

5. Verfahren nach einem der Ansprüche 3 oder 4,
wobei eine Information zur Mitteilung der ermittelten Übertragungszeiträume von dem Serversystem (30) an die Zeitund/oder Anwesenheitserfassungseinrichtung (1) übermittelt wird.

6. Verfahren nach einem der Ansprüche 3 bis 5, wobei die festgelegten Zeiträume in Schritt a):
- entweder den ermittelten Übertragungszeiträumen entsprechen,
- oder in Abhängigkeit der ermittelten Übertragungszeiträume festgelegt und/oder angepasst werden, vorzugsweise durch die Zeitund/oder Anwesenheitserfassungseinrichtung (1), insbesondere derart, dass die festgelegten Zeiträume innerhalb der ermittelten Übertragungszeiträume liegen.

7. Verfahren nach einem der Ansprüche 1 bis 6, wobei die festgelegten Zeiträume derart in Abhängigkeit der erfassten und/oder analysierten Anzahl an Nutzerinteraktionen mit der Zeit- und/oder Anwesenheitserfassungseinrichtung festgelegt und/oder angepasst werden, dass die festgelegten Zeiträume solche Zeiträume umfassen oder sind, in denen die Anzahl an Nutzerinteraktionen mit der Zeitund/oder Anwesenheitserfassungseinrichtung (1) in einer festlegbaren Zeitspanne unterhalb eines wählbaren Schwellenwerts liegt.

8. Verfahren nach einem der Ansprüche 3 bis 7, wobei Schritt b1) und/oder Schritt b2) kontinuierlich durchgeführt werden oder in regelmäßigen oder unregelmäßigen Abständen wiederholt werden, vorzugsweise wobei Schritt b1) und/oder Schritt b2) zumindest einmal oder zumindest teilweise vor Schritt a) durchgeführt werden.

9. Verfahren nach einem der vorhergehenden Ansprüche, wobei die Daten:
- personenbezogene Daten, insbesondere Personalstammdaten; und/oder
- Firmware-Daten und/oder Software-Daten für die Zeit- und/oder Anwesenheitserfassungseinrichtung (1)
umfassen.

10. Zeit- und/oder Anwesenheitserfassungseinrichtung (1) zur Zeitund/oder Anwesenheitserfassung von Personen, wobei die Zeitund/oder Anwesenheitserfassungseinrichtung (1) eine Kommunikationsschnittstelle (4) zur Kommunikation mit dem Serversystem (30) über eine Kommunikationsverbindung (111) aufweist,
wobei die Zeit- und/oder Anwesenheitserfassungseinrichtung (1) zur Ausführung eines Verfahrens nach einem der vorhergehenden Ansprüche konfiguriert ist.

11. Serversystem (30) zur Zeit- und/oder Anwesenheitserfassung von Personen, wobei das Serversystem (30) zur Kommunikation mit einer Zeit- und/oder Anwesenheitserfassungseinrichtung (1) über eine Kommunikationsverbindung (111) konfiguriert ist,
wobei das Serversystem (30) derart konfiguriert ist, dass:
--- das Serversystem (30) Daten an die Zeit- und/oder Anwesenheitserfassungseinrichtung (1) in festgelegten Zeiträumen übermittelt; und/oder
--- das Serversystem (30) Daten von der Zeit- und/oder Anwesenheitserfassungseinrichtung (1) in den festgelegten Zeiträumen empfängt,
wobei das Serversystem (30) zur Ausführung eines Verfahrens nach einem der Ansprüche 1 bis 9 konfiguriert ist.

12. System, umfassend eine Zeit- und/oder Anwesenheitserfassungseinrichtung (1) nach Anspruch 10 und ein Serversystem (30) nach Anspruch 11.

13. Computerprogrammprodukt, umfassend Befehle, die bei der Ausführung durch Computermittel, insbesondere durch eine Zeitund/oder Anwesenheitserfassungseinrichtung (1) gemäß Anspruch 10 und/oder durch ein Serversystem (30) gemäß Anspruch 11, diese veranlassen, ein Verfahren nach einem der Ansprüche 1 bis 9 durchzuführen.

## Claims

1. A method for operating a time and/or attendance recording device (1), wherein the time and/or attendance recording device (1) has a communication interface (4) for communication with a server system (30) via a communication link (111),
wherein the method comprises at least the following step:
a)
--- Receiving and/or retrieving data from the server system (30) by the time and/or attendance recording device (1) in specified time periods; and/or
--- Transmitting data from the time and/or attendance recording device (1) to the server system (30) in the specified time periods,
wherein the method further comprises:
b2)--- Recording and/or analysing a utilisation of the time and/or attendance recording device (1), wherein the specified time periods are specified and/or adjusted as a function of the recorded and/or analysed utilisation of the time and/or attendance recording device,
wherein recording and/or analysing the utilisation of the time and/or attendance recording device (1) in step b2) comprises:
- recording and/or analysing a number of user interactions with the time and/or attendance recording device (1) in a specifiable period of time, wherein the specified time periods are specified and/or adjusted as a function of the recorded and/or analysed number of user interactions with the time and/or attendance recording device (1).

2. The method according to claim 1, wherein the specified time periods are specified and/or adjusted:
- as a function of a utilisation of the communication link (111) between the server system (30) and the time and/or attendance recording device (1); and/or
- as a function of a utilisation of the server system (30); and/or
- as a function of a utilisation of the time and/or attendance recording device (1), in particular at least once or at least partially before step a).

3. The method according to one of the preceding claims, wherein the method further comprises:
b1)--- Recording and/or analysing:
- a utilisation of the communication link (111) between the server system (30) and the time and/or attendance recording device (1); and/or
- a utilisation of the server system (30), in particular by means of the server system (30),
wherein - by way of the server system (30) - transmission time periods are determined as a function of the recorded and/or analysed utilisation of the communication link (111) and/or the server system (30).

4. The method according to claim 3, wherein the transmission time periods are determined as a function of the recorded and/or analysed utilisation of the communication link (111) and/or the server system (30) in such manner that the transmission time periods comprise or are such time periods in which the utilisation of the communication link (111) and/or the server system (30) lies below a selectable threshold value.

5. The method according to one of claims 3 or 4,
wherein information for communicating the determined transmission time periods is transmitted from the server system (30) to the time and/or attendance recording device (1).

6. The method according to one of claims 3 to 5, wherein the specified time periods in step a):
- either correspond to the determined transmission time periods,
- or are specified and/or adjusted as a function of the determined transmission time periods, preferably by the time and/or attendance recording device (1), in particular in such manner that the specified time periods lie within the determined transmission time periods.

7. The method according to one of claims 1 to 6, wherein the specified time periods are specified and/or adjusted as a function of the recorded and/or analysed number of user interactions with the time and/or attendance recording device in such manner that the specified time periods comprise or are such time periods in which the number of user interactions with the time and/or attendance recording device (1) in a specifiable period of time lies below a selectable threshold value.

8. The method according to one of claims 3 to 7, wherein step b1) and/or step b2) are carried out continuously or are repeated at regular or irregular intervals, preferably wherein step b1) and/or step b2) are carried out at least once or at least partially before step a).

9. The method according to one of the preceding claims, wherein the data comprises:
- personal data, in particular personnel master data; and/or
- firmware data and/or software data for the time and/or attendance recording device (1).

10. A time and/or attendance recording device (1) for time and/or attendance recording of persons, wherein the time and/or attendance recording device (1) has a communication interface (4) for communication with the server system (30) via a communication link (111),
wherein the time and/or attendance recording device (1) is configured to carry out a method according to one of the preceding claims.

11. A server system (30) for time and/or attendance recording of persons, wherein the server system (30) is configured to communicate with a time and/or attendance recording device (1) via a communication link (111),
wherein the server system (30) is configured in such manner that:
--- the server system (30) transmits data to the time and/or attendance recording device (1) in specified time periods; and/or
--- the server system (30) receives data from the time and/or attendance recording device (1) in the specified time periods,
wherein the server system (30) is configured to carry out a method according to one of claims 1 to 9.

12. A system comprising a time and/or attendance recording device (1) according to claim 10 and a server system (30) according to claim 11.

13. A computer program product comprising instructions which, when executed by computer means, in particular by a time and/or attendance recording device (1) according to claim 10 and/or by a server system (30) according to claim 11, cause it to carry out a method according to one of claims 1 to 9.

## Revendications

1. Procédé de fonctionnement d'un dispositif de détection d'heure et/ou de présence (1), dans lequel le dispositif de détection d'heure et/ou de présence (1) présente une interface de communication (4) pour la communication avec un système serveur (30) par l'intermédiaire d'une liaison de communication (111), dans lequel le procédé comprend au moins l'étape suivante :
a)
--- réception et/ou récupération de données du système serveur (30) par le dispositif de détection d'heure et/ou de présence (1) à des périodes de temps établies ; et/ou
--- transmission de données du dispositif de détection d'heure et/ou de présence (1) au système serveur (30) dans les périodes de temps établies, dans lequel le procédé comprend en outre :
b2)--- détection et/ou analyse d'un taux d'utilisation du dispositif de détection d'heure et/ou de présence (1), dans lequel les périodes de temps établies sont établies et/ou adaptées en fonction du taux d'utilisation détecté et/ou analysé du dispositif de détection d'heure et/ou de présence,
dans lequel la détection et/ou l'analyse du taux d'utilisation du dispositif de détection d'heure et/ou de présence (1) comprend l'étape b2) :
- détection et/ou analyse d'un nombre d'interactions d'utilisateurs avec le dispositif de détection d'heure et/ou de présence (1) dans une période de temps pouvant être établie, dans lequel les périodes établies sont établies et/ou adaptées en fonction du nombre détecté et/ou analysé d'interactions d'utilisateurs avec le dispositif de détection d'heure et/ou de présence (1).

2. Procédé selon la revendication 1, dans lequel les périodes de temps établies sont établies et/ou adaptées :
- en fonction d'un taux d'utilisation de la liaison de communication (111) entre le système serveur (30) et le dispositif de détection d'heure et/ou de présence (1) ; et/ou
- en fonction d'un taux d'utilisation du système serveur (30) ; et/ou
- en fonction d'un taux d'utilisation du dispositif de détection d'heure et/ou de présence (1), en particulier au moins une fois ou au moins partiellement avant l'étape a).

3. Procédé selon l'une des revendications précédentes, dans lequel ledit procédé comprend en outre :
b1)--- détection et/ou analyse :
- d'un taux d'utilisation de la liaison de communication (111) entre le système serveur (30) et le dispositif de détection d'heure et/ou de présence (1) ; et/ou
- d'un taux d'utilisation du système serveur (30), en particulier à l'aide du système serveur (30),
dans lequel des périodes de temps de transfert sont déterminées - par le système serveur (30) - en fonction du taux d'utilisation détecté et/ou analysé de la liaison de communication (111) et/ou du système serveur (30).

4. Procédé selon la revendication 3, dans lequel les périodes de temps de transfert sont déterminées en fonction du taux d'utilisation détecté et/ou analysé de la liaison de communication (111) et/ou du système serveur (30), de telle sorte que les périodes de temps de transfert comprennent ou sont des périodes de temps dans lesquelles le taux d'utilisation de la liaison de communication (111) et/ou du système serveur (30) est inférieur à une valeur seuil pouvant être sélectionnée.

5. Procédé selon l'une des revendications 3 ou 4,
dans lequel une information de notification des périodes de temps de transfert déterminées est transmise par le système serveur (30) au dispositif de détection d'heure et/ou de présence (1).

6. Procédé selon l'une des revendications 3 à 5, dans lequel les périodes de temps établies à l'étape a) :
- soit correspondent aux périodes de temps de transfert déterminées,
- soit sont établies et/ou adaptées en fonction des périodes de temps de transfert déterminées, de préférence par le dispositif de détection d'heure et/ou de présence (1), en particulier de telle sorte que les périodes de temps établies se situent à l'intérieur des périodes de temps de transfert déterminées.

7. Procédé selon l'une des revendications 1 à 6, dans lequel les périodes de temps établies sont établies et/ou adaptées en fonction du nombre détecté et/ou analysé d'interactions d'utilisateurs avec le dispositif de détection d'heure et/ou de présence de telle sorte que les périodes de temps établies comprennent ou sont des périodes de temps dans lesquelles le nombre d'interactions d'utilisateurs avec le dispositif de détection d'heure et/ou de présence (1) dans un laps de temps pouvant être établi est inférieur à une valeur seuil pouvant être sélectionnée.

8. Procédé selon l'une des revendications 3 à 7, dans lequel l'étape b1) et/ou l'étape b2) sont réalisées en continu ou sont répétées à intervalles réguliers ou irréguliers, de préférence dans lequel l'étape b1) et/ou l'étape b2) sont réalisées au moins une fois ou au moins partiellement avant l'étape a).

9. Procédé selon l'une des revendications précédentes, dans lequel les données comprennent :
- des données à caractère personnel, en particulier des données de base du personnel ; et/ou
- des données de micrologiciel et/ou des données de logiciel pour le dispositif de détection d'heure et/ou de présence (1).

10. Dispositif de détection d'heure et/ou de présence (1) pour la détection d'heure et/ou de présence de personnes, dans lequel le dispositif de détection d'heure et/ou de présence (1) présente une interface de communication (4) pour la communication avec le système serveur (30) par l'intermédiaire d'une liaison de communication (111),
dans lequel le dispositif de détection d'heure et/ou de présence (1) est configuré pour mettre en oeuvre un procédé selon l'une des revendications précédentes.

11. Système serveur (30) pour la détection d'heure et/ou de présence de personnes, dans lequel le système serveur (30) est configuré pour communiquer avec un dispositif de détection d'heure et/ou de présence (1) par l'intermédiaire d'une liaison de communication (111),
dans lequel le système serveur (30) est configuré de telle sorte que :
--- le système serveur (30) transmet des données au dispositif de détection d'heure et/ou et/ou de présence (1) à des périodes de temps établies ; et/ou
--- le système serveur (30) reçoit des données du dispositif de détection d'heure et/ou de présence (1) dans les périodes de temps établies,
dans lequel le système serveur (30) est configuré pour exécuter un procédé selon l'une des revendications 1 à 9.

12. Système, comprenant un dispositif de détection d'heure et/ou de présence (1) selon la revendication 10 et un système serveur (30) selon la revendication 11.

13. Produit-programme d'ordinateur, comprenant des instructions qui, lorsqu'elles sont exécutées par des moyens informatiques, en particulier par un dispositif de détection d'heure et/ou de présence (1) selon la revendication 10 et/ou par un système serveur (30) selon la revendication 11, les amènent à réaliser un procédé selon l'une des revendications 1 à 9.
